# EUROPÄISCHE PATENTANMELDUNG

(11) **EP 2 156 999 A2**
(43) Veröffentlichungstag der Anmeldung: **24.02.2010**
(21) Anmeldenummer: 09100359.0
(22) Anmeldetag: 16.07.2009
(51) Int. Cl.: B60S 1/04

(54) **Scheibenwischervorrichtung**

(30) Priorität: 19.08.2008 DE 102008041342
(71) Anmelder: ROBERT BOSCH GMBH, 70442 Stuttgart (DE)
(72) Erfinder: Heller, Joachim, 77815, Buehl (DE)

(57) **Zusammenfassung**

Die vorliegende Erfindung betrifft eine Scheibenwischervorrichtung für ein Kraftfahrzeug mit einem Wischermotor, der über ein mit dem Wischermotor verbundenes Getriebegehäuse (4) an einem Montagebereich (3) einer Motorplatine (1) an der Fahrzeugkarosserie befestigbar ist, wobei zur Befestigung des Wischemotors an der Fahrzeugkarosserie eine Klemmverbindung zwischen dem Montagebereich (3), insbesondere einem Gestänge, und einem Befestigungsbereich (5) des Getriebegehäuses (4) ausgebildet ist. Zur Aufbringung der Klemmkraft und/oder zur axialen Fixierung der Motorplatine an dem Befestigungsbereich (5) des Getriebegehäuses (4) ist zwischen dem Getriebegehäuse (4) und dem Montagebereich (3) der Motorplatine (1) ein einzelnes, zentral im Befestigungsbereich (5) des Getriebegehäuses (4) angeordnetes Befestigungselement (6) vorgesehen.

## Beschreibung

Die vorliegende Erfindung betrifft eine Scheibenwischervorrichtung für ein Kraftfahrzeug mit einem Wischermotor, der über ein mit dem Wischermotor verbundenes Getriebegehäuse an einem Montagebereich einer Motorplatine an der Fahrzeugkarosserie befestigbar ist, wobei zur Befestigung des Wischermotors an der Fahrzeugkarosserie eine Klemmverbindung zwischen dem Montagebereich, insbesondere einem Gestänge, und einem Befestigungsbereich des Getriebegehäuses ausgebildet ist.

### Stand der Technik

Scheibenwischervorrichtungen dieser Art sind bereits bekannt. Dabei ist es das Ziel, den Wischermotor möglichst sicher zu montieren und auch Biege- und Torsionsbelastungen auffangen zu können und gleichzeitig eine leichte Montage bzw. Demontage zur Verfügung zu stellen, um im Montage- und Wartungsfalle keine unnötigen Arbeitskosten zu erzeugen.

Aus der FR 2783477-A1 ist eine Befestigungsvorrichtung bekannt, über eine Klemmverbindung zwischen der Motorplatine und einer letztere umgreifenden Schalenkonstruktion eine Befestigung bereitzustellen. Allerdings ist diese Art der Befestigung aufgrund der formgenau angepassten Konturen von Schale und Motorplatine sehr fehleranfällig. Außerdem ist die Fertigung der Schalenkonstruktion sehr kostspielig.

Aus der DE 198 20 798 A1 ist eine Scheibenwischervorrichtung bekannt, die einen Wischermotor umfasst, welcher über ein mit dem Wischermotor verbundenes Getriebegehäuse und über einen Wischerträger mit einer Platine in Form eines Hohlprofils an der Fahrzeugkarosserie befestigt ist. Das Getriebegehäuse hat mehrere Schraubenstutzen, die im Abstand zu einem abtriebsseitigen Befestigungsdom angeordnet sind. Die Motorplatine bzw. das Hohlprofil wird zwischen dem Schraubenstutzen einerseits und dem Befestigungsdom andererseits eingesetzt bzw. angepresst, so dass sich die Motorplatine am Befestigungsdom und am Schraubenstutzen abstützen kann. Um ein Herausrutschen aus dieser Position zu verhindern, ist eine Haltevorrichtung in der Form einer Abdeckplatte oberhalb der Motorplatine angeordnet, die sich wiederum an den Schraubenstutzen und dem Befestigungsdom bzw. dem Gegenlager des Getriebegehäuses abstützt. In axialer Richtung ist die Motorplatine gegenüber dem Getriebegehäuse ebenfalls formschlüssig gesichert, indem es in dem Bereich der Schraubenstutzen und/oder des Befestigungsdoms Einbuchtungen aufweist, die die Schraubenstutzen bzw. den Befestigungsdom bereichsweise umfassen.

Nachteilig an dieser Konstruktion ist jedoch, dass die Montage aufgrund der millimetergenau aufeinander abzustimmenden und aneinander anzupassenden Bauteile sowie aufgrund der bei der Montage großen Anzahl an zu befestigenden Schrauben sehr aufwendig ist.

### Offenbarung der Erfindung

Es ist daher Aufgabe der vorliegenden Erfindung, eine Scheibenwischervorrichtung vorzusehen, die eine einfache und sichere Befestigung des Wischermotors an der Motorplatine ermöglicht.

Diese Aufgabe wird erfindungsgemäß dadurch gelöst, dass zur Aufbringung der Klemmkraft und/oder zur axialen Fixierung der Motorplatine an dem Befestigungsbereich des Getriebegehäuses zwischen dem Getriebegehäuse und dem Montagebereich der Motorplatine ein einzelnes zentral im Befestigungsbereich des Getriebegehäuses angeordnetes Befestigungselement vorgesehen ist.

Mit anderen Worten wird durch die erfindungsgemäße Anordnung des zentralen Befestigungselementes die Anzahl der Schrauben verringert. Auch eine aus dem Stand der Technik bekannte Halteplatte kann auf diese Weise weggelassen werden Die Motorplatine weist einen einfachen Aufbau aufund besteht aus einem Stück, das keine Hinterschneidungen oder doppelwandigen Bereiche besitzt, so dass es sowohl in Leichtmetall als auch in Kunststoff durch Druckguss oder Spritzguss hergestellbar ist.

Das Befestigungselement kann durch eine Befestigungsschraube, einen Bolzen, einen Stift oder eine Niet gebildet sein. Sämtliche anderen im Stand der Technik geeigneten Befestigungselemente können natürlich auch eingesetzt werden.

Um eine möglichst gleichmäßige Kraftverteilung der durch das Befestigungselement auf die Motorplatine aufgebrachten Kraft zu erreichen, kann in einem Ausführungsbeispiel zwischen Befestigungselement und Montagebereich der Motorplatine ein Kraftverteilungselement, insbesondere ein Haltebügel oder eine Druckplatte zwischengeschaltet sein.

In einem weiteren Ausführungsbeispiel der vorliegenden Erfindung weist die Motorplatine im Montagebereich eine Verjüngung auf. Dadurch wird erreicht, dass der bei der Montage zurückzulegende Schraubweg und somit die bei der Montage benötigte Zeit verkürzt wird, da der durch die Verjüngung freigegebene Raum durch einfaches Stecken überwunden werden kann.

Um die Eindringtiefe der Schraube in das Getriebegehäuse möglichst gering zu halten und gleichzeitig aber eine sichere Befestigung der Motorplatine an dem Getriebegehäuse zu gewährleisten, ist in einem Ausführungsbeispiel im Bereich der Verjüngung mindestens ein Vorsprung im Getriebegehäuse ausgebildet, der in den von der Verjüngung freigegebenen Raum hineinragt. Dies hat den Vorteil, dass das in das Getriebegehäuse einzusetzende Getriebe unmittelbar an dem Getriebegehäuse anschließen kann, ohne dabei die Eindringtiefe des Befestigungselementes berücksichtigen zu müssen. Die sichere Befestigung des Befestigungselementes wird bereits durch Einsetzen des Befestigungselementes in den Vorsprung erreicht. Gleichzeitig kann bei entsprechender Ausbildung des Vorsprungs auch eine Positionierhilfe der Motorplatine an dem Getriebegehäuse bereitgestellt werden.

Bei Befestigung der Motorplatine an dem Getriebegehäuse kann es notwendig sein, zur Befestigung der Motorplatine eine ebene definierte Auflagefläche an dem Getriebegehäuse bereitzustellen. In einem Ausführungsbeispielist daher unterhalb der Motorplatine mindestens eine Aussparung in dem Getriebegehäuse ausgebildet, die dafür sorgt, dass die mit sehr geringer Toleranz zu bearbeitende Fläche möglichst klein ausfällt, jedoch groß genug ist, um eventuell auf die Verbindung aufgebrachte Biege- und Torsionsmomente abzufangen.

In einem weiteren Ausführungsbeispiel der vorliegenden Erfindung ist der Montagebereich der Motorplatine zwischen einem an dem Getriebegehäuse ausgebildeten Gegenlager und mindestens einem an dem Getriebegehäuse ausgebildeten Lagerdom und/oder dem zentral angeordneten Befestigungselement geführt, insbesondere eingeklemmt. Durch diese Anordnung wird gewährleistet, dass auch axiale Kräfte ohne eine Verschiebung der Motorplatine übertragen werden können.

Um eine solche Einklemmung bzw axiale Fixierung der Motorplatine erreichen zu können, ohne dazu den Montagebereich eventuell mehreren Biegeprozessen unterziehen zu müssen, sind in einem Ausführungsbeispiel im Montagebereich der Motorplatine Einbuchtungen, sogenannte Sicken, im Bereich des Lagerdoms, des Gegenlagers und/oder des zentral angeordneten Befestigungselements vorgesehen. Ferner kann der Montagebereich im Bereich des Gegenlagers und des Lagerdoms eine durchgehende Querschnittsverengung aufweisen, deren Schultern den Montagebereich in Längsrichtung im Getriebegehäuse in Position halten.

Der Montagebereich kann dabeije nach Belastung und Ausbildung der Lagerdome bzw. Befestigungselemente als Hohlprofil ausgebildet sein und einen dreieckigen, rechteckigen, runden, elliptischen oder polygonförmigen Querschnitt aufweisen.

Hinsichtlich weiterer vorteilhafter Aus führungs formen der vorliegenden Erfindung wird auf die Unteransprüche sowie die nachfolgende Beschreibung eines Ausführungsbeispiels anhand der beiliegenden Zeichnungen verwiesen.

### Ausführungsbeispiele

Es zeigt:
- Figur 1: eine schematische Teildarstellung einer erfindungsgemäßen Scheibenwischervorrichtung im Schnitt;
- Figur 2: eine Teildarstellung einer Scheibenwischervorrichtung mit verjüngter Motorplatine;
- Figur 3: eine beispielhafte Darstellung eines erfindungsgemäßen Getriebegehäuses; und
- Figur 4: eine perspektivische Teildarstellung einer erfindungsgemäßen Motorplatine.

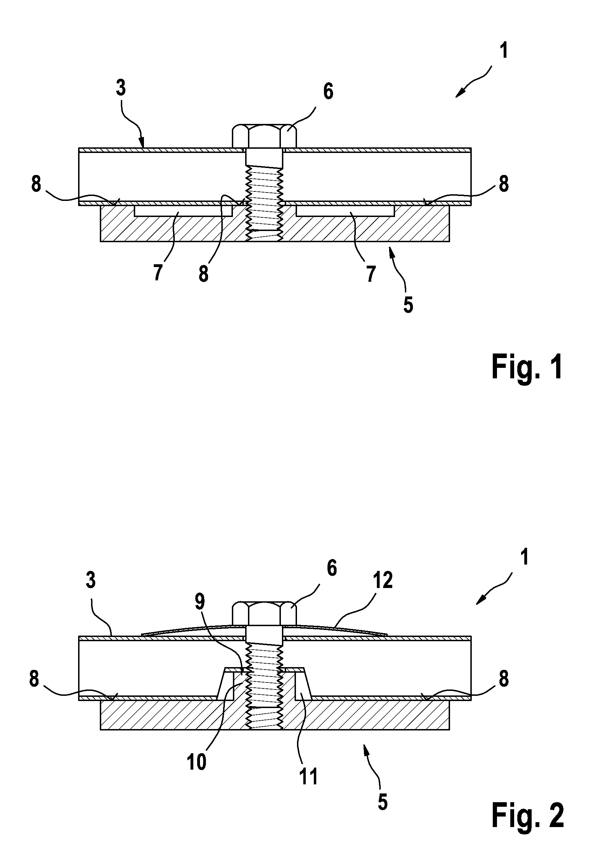

Die Figur 1 zeigt eine Teildarstellung einer erfindungsgemäßen Scheibenwischervorrichtung. Zur Vereinfachung wurde die Darstellung auf das Befestigungsprinzip reduziert. Die Darstellung zeigt eine Motorplatine 1, welche als Hohlprofil ausgebildet ist. Die Motorplatine ist über einen Befestigungsmechanismus 2 mit dem Getriebegehäuse verbunden. Der Befestigungsmechanismus 2 ist an einem Montagebereich 3 der Motorplatine 1 ausgebildet. Dabei sind ein Getriebegehäuse 4 und die Motorplatine 1 über eine Klemmverbindung mit einander verbunden. Zur Aufbringung der Klemmkraft und zur axialen Fixierung der Motorplatine 1 an dem Befestigungsbereich 5 des Getriebegehäuses 4 ist eine Befestigungsschraube 6 zentral über eine Bohrung 6a in der Motorplatine 1 in den Befestigungsbereich 5 des Getriebegehäuses 4 eingesetzt. Unterhalb der Motorplatine 1 sind zwei Aussparungen 7 in dem Getriebegehäuse 4 ausgebildet, um die Auflagefläche der Motorplatine 1 an dem Getriebegehäuse 4 zu verringern. Die Motorplatine 1 besitztim vorliegenden Ausführungsbeispiel drei Auflageflächen 8 mit dem Getriebegehäuse 4. Dadurch wird erreicht, dass die für die sichere Lagerung der Motorplatine 1 notwendigen ebenen definierten Auflageflächen 8 möglichst klein gehalten werden, da diese sehr aufwendig zu fertigen sind, jedoch groß genug, um auf die Verbindung wirkende Biege- und Torsionsmomente sicher aufnehmen zu können.

Figur 2 zeigt eine Motorplatine 1, deren Montagebereich 3 mit einer Verjüngung 9 versehen ist. Dadurch wird erreicht, dass zum einen der von der Befestigungsschraube 6 durch Schraubenbewegung zurückzulegende Weg und somit die für die Montage benötigte Zeit verkürzt wird. Zum anderen weist das Getriebegehäuse 4 im Bereich der Verjüngung 9 einen Vorsprung 10 auf, der in den von der Verjüngung 9 freigegebenen Raum 11 hineinragt und dafür sorgt, dass die Befestigungsschraube 6 im montierten Zustand nicht in das Getriebegehäuse 4 hineinragt, so dass das sich an das Getriebegehäuse 4 anschließende nicht dargestellte Getriebe unmittelbar an den Wandungen des Getriebegehäuses 4 anschließen kann und somit sehr kompakt verbaut werden kann. Der Vorsprung 10 ist in diesem Ausführungsbeispiel so ausgebildet, dass er neben der Befestigungsfunktion auch die Funktion der Positionierung der Motorplatine 1 an dem Getriebegehäuse 4 übernimmt. Ferner ist zwischen der Befestigungs schraube 6 und dem Montagebereich 3 der Motorplatine 1 ein Kraftverteilungselement in Form eines Haltebügels 12 zwischengeschaltet, der bei Anziehen der Befestigungs schraube 6 dafür sorgt, dass die Anzugskraft auf den gesamten Berührungsbereich des Haltebügels mit der Motorplatine 1 verteilt wird.

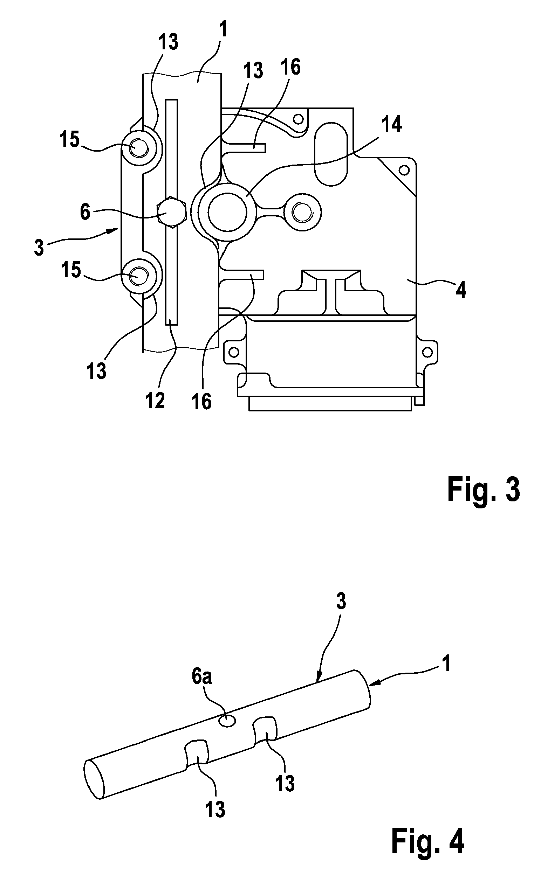

In dem in Figur 3 dargestellten Ausführungsbeispiel sind ferner im Montagebereich 3 der Motorplatine 1 Einbuchtungen 13, sogenannte Sicken ausgebildet (siehe auch Figur 4). Das Getriebegehäuse 4 wird hier an der Motorplatine 1 gehalten, indem die Motorplatine 1 zwischen einem Lagerdom 14, in dem eine nicht dargestellte Abtriebswelle gelagert ist, und zwei in dem Getriebegehäuse 4 ausgebildeten Stutzen 15 hindurchgeführt wird, die in Achsrichtung der Motorplatine 1 zu beiden Seiten des Lagerdoms 14 versetzt angeordnet sind. Die Umfangs flächen der Schraubenstutzen 15 bzw. des Lagerdoms 14 besitzen durch das Herstellungsverfahren bedingt eine Schräge mit einem Schrägungswinkel. Im Bereich der Schraubenstutzen 15 und des Lagerdoms 14 ist die Motorplatine 1 über ihre Einbuchtung 13 an die Schrägen angepasst, so dass es über einen längeren Bereich an den Schraubenstutzen 15 bzw. an dem Lagerdom 14 anliegt und somit gegen Verdrehen gesichert und axial zum Getriebegehäuse 4 fixiert ist.

Um die Haltekräfte gleichmäßig in das Getriebegehäuse 4 einzuleiten und die Kerbwirkung auf die Motorplatine 1 gering zu halten, sind an dem Getriebegehäuse 4 zur Verstärkung Gehäuserippen 16 ausgebildet, die im Bereich der Schraubenstutzen 15 und des Lagerdoms 14 Gegenlager bilden. Die Motorplatine 1 weist hier ein Hohlprofil mit kreisrunder Querschnitts fläche auf In weiteren nicht dargestellten Ausführungsbeispielen sind die Hohlprofile mit unterschiedlichen Querschnitts flächen ausgebildet, z.B. mit dreieckigen, rechteckigen, elliptischen oder polygonförmigen Querschnitten. Dies bietet die Möglichkeit, die Motorplatine 1 verschiedensten Belastungen und Einbaubedingungen anzupassen.

## Patentansprüche

1. Scheibenwischervorrichtung für ein Kraftfahrzeug mit einem Wischermotor, der über ein mit dem Wischermotor verbundenes Getriebegehäuse (4) an einem Montagebereich (3) einer Motorplatine (1) an der Fahrzeugkarosserie befestigbar ist, wobei zur Befestigung des Wischermotors an der Fahrzeugkarosserie eine Klemmverbindung zwischen dem Montagebereich (3), insbesondere einem Gestänge, und einem Befestigungsbereich (5) des Getriebegehäuses (4) ausgebildet ist, **dadurch gekennzeichnet, dass** zur Aufbringung der Klemmkraft und/oder zur axialen Fixierung der Motorplatine an dem Befestigungsbereich (5) des Getriebegehäuses (4) zwischen dem Getriebegehäuse (4) und dem Montagebereich (59 der Motorplatine (1) ein einzelnes, zentral im Befestigungsbereich (5) des Getriebegehäuses (4) angeordnetes Befestigungselement (6) vorgesehen ist.

2. Scheibenwischervorrichtung nach Anspruch 1, **dadurch gekennzeichnet, dass** das Befestigungselement (6) durch eine Befestigungsschraube, einen Bolzen und einen Stift oder ein Niet gebildet ist.

3. Scheibenwischervorrichtung nach Anspruch 1 oder 2, **dadurch gekennzeichnet, dass** zwischen Befestigungselement (6) und Montagebereich (3) der Motorplatine (1) ein Kraftverteilungselement, insbesondere ein Haltebügel (12) oder eine Druckplatte zwischengeschaltet ist.

4. Scheibenwischervorrichtung nach einem der vorherigen Ansprüche, **dadurch gekennzeichnet, dass** der Montagebereich (3) der Motorplatine (1) zumindest bereichsweise eine Verjüngung aufweist.

5. Scheibenwischervorrichtung nach Anspruch 4, **dadurch gekennzeichnet, dass** im Bereich der Verjüngung (9) mindestens ein Vorsprung (10) im Getriebegehäuse (4) ausgebildet ist, der in einen von der Verjüngung (9) freigegebenen Raum (11) hineinragt.

6. Scheibenwischervorrichtung nach einem der vorhergehenden Ansprüche, **dadurch gekennzeichnet, dass** unterhalb der Motorplatine (1) mindestens eine Aussparung (7) in dem Getriebegehäuse (4) ausgebildet ist, um die Auflagefläche (8) der Motorplatine (1) auf dem Getriebegehäuse (4) zu verringern.

7. Scheibenwischervorrichtung nach einem der vorherigen Ansprüche, **dadurch gekennzeichnet, dass** der Montagebereich (3) der Motorplatine (1) zwischen einem an dem Getriebegehäuse (4) ausgebildeten Gegenlager und mindestens einem an dem Getriebegehäuse (4) ausgebildeten Lagerdom (14) und/oder dem zentral angeordneten Befestigungselement (6) geführt, insbesondere eingeklemmt ist.

8. Scheibenwischervorrichtung nach Anspruch 7, **dadurch gekennzeichnet, dass** im Montagebereich (3) der Motorplatine (1) Einbuchtungen (13) im Bereich des Lagerdoms (14), des Gegenlagers und/oder des zentral angeordneten Befestigungselementes 86) vorgesehen sind, um Axialkräfte übertragen zu können.

9. Scheibenwischervorrichtung nach einem der Ansprüche 7 oder 8, **dadurch gekennzeichnet, dass** der Montagebereich (3) im Bereich des Gegenlagers und des Lagerdoms (14) eine durchgehende Querschnittsverengung aufweist, deren Schultern den Montagebereich (13) in Längsrichtung im Getriebegehäuse (4) in Position halten.

10. Scheibenwischervorrichtung nach einem der vorherigen Ansprüche, **dadurch gekennzeichnet, dass** der Montagebereich (3) der Motorplatine (1) einen dreieckigen, rechteckigen, runden, elliptischen oder polygonförmigen Querschnitt aufweist.
